# EUROPÄISCHE PATENTSCHRIFT

(11) **EP 1 243 301 B1**
(45) Veröffentlichungstag und Bekanntmachung des Hinweises auf die Patenterteilung: **17.09.2003**
(21) Anmeldenummer: 01106844.2
(22) Anmeldetag: 19.03.2001
(51) Int. Cl.: B01D 29/48

(54) **Filterkerze**
Filter candle
Bougie filtrant

(43) Veröffentlichungstag der Anmeldung: 25.09.2002
(73) Patentinhaber: Anton Steinecker Maschinenfabrik GmbH, 85356 Freising-Attaching (DE)
(72) Erfinder: Hahn, Adolf, 92726 Waidhaus (DE); Banke, Friedrich, 84416 Inning am Holz (DE); Flossmann, Rudolf, 85416 Langenbach (DE); Gratzer, Harald, 85459 Berglern (DE)
(74) Vertreter: Grünecker, Kinkeldey, Stockmair & Schwanhäusser Anwaltssozietät

(56) Entgegenhaltungen:
- EP-A- 0 567 726
- WO-A-93/07944
- DE-A- 2 241 063
- US-A- 3 667 615

## Beschreibung

Die Erfindung betrifft eine Filterkerze für Anschwemmfilter zur Filtrierung und /oder Stabilisierung von Fluiden, insbesondere von Bier, mit einem rohrförmigen Filterkörper, der aus einem spiralförmig gewundenen Draht gebildet ist, wobei Spalte zwischen den Drahtwindungen als Fluiddurchlässe vorgesehen sind.

Anschwemmfilter werden insbesondere bei der Bierherstellung benötigt, um die im Bier enthaltenen Trübstoffe herauszufiltern und/ oder das Bier zu stabilisieren. Bei einem bekannten Anschwemmfilter werden Filterkerzen eingesetzt, bei denen der Filterkörper einen gewundenem Draht aufweist, wobei Spalte zwischen den Drahtwindungen als Fluiddurchlässe, dienen. Der gewundene Draht ist entweder selbsttragend, oder wird durch einen mit dem gewundenen Draht in Verbindung stehenden Träger gehalten. Die Filterkerzen des Anschwemmfilters sind in einem Unfiltratraum angeordnet und leiten das Filtrat dann weiter in einen Filtratbereich. Zur Filtration werden dem zu filtrierenden Bier Filterhilfsmittel wie z.B. Kieselgur, Cellulose, Perlite, Aktivkohle, Kunstofffasem, Glasfasern, Zellstofffaser oder dgl.. zugesetzt. Die Filterhilfsmittel werden bei der Filtration an der Außenfläche des Filterkörpers bei Beginn des Filtervorganges angeschwemmt, so dass eine Anschwemmschicht ausgebildet wird, die wiederum als Filterschicht dient.

Die Haftung der Anschwemmschicht auf der Filterkörperoberfläche ist insbesondere für die Prozeßsicherheit von großer Bedeutung, da ein Abrutschen zu einer Zerstörung der Filterkuchenstruktur und somit auch zu einer unzureichenden Filterqualität führen kann. Die bekannten Filterkörper aus gewundenem Draht führen jedoch zum Teil nicht immer zu einer optimalen Haftung des Filterhilfsmittels auf dem Filterkörper, so dass zu diesen Fehlfunktionen kommen kann.

Es ist daher die Aufgabe der vorliegenden Erfindung, eine Filterkerze zum Filtern von Fluiden bereitzustellen, die eine verbesserte Haftung der Anschwemmschicht ermöglicht.

Diese Aufgabe wird gelöst mittels eines Filters gemäß Anspruch 1.

Durch die Neigung der Fläche des gewundenen Drahtes, die auf der Außenseite des Filterkörpers liegt, ergibt sich ein Versatz der Flächen von aufeinanderfolgenden Windungen, so dass die Anschwemmschicht besser haften kann. Trotz dieser verbesserten Haftung ergibt sich aber auch eine verbesserte Rückspülmöglichkeit der Anschwemmschicht, weil durch die erfindungsgemäße Anordnung des gewundenen Drahtes die Verblockungsgefahr geringer ist.

Die selben Vorteile ergeben sich auch bei der separaten oder gleichzeitigen Stabilisierung von Bier mit Stabilisierungsmitteln, wie z.B. Polyvinylpolypyrolidon (PVPP) oder Filterhilfsmitteln ,z.B. Kieselgelen, da deren Haftungsvermögen besonders kritisch ist.

Der Winkel α liegt bevorzugt in einem Bereich zwischen 1 und 10°, vorzugsweise zwischen 3 und 5°. In diesem Bereich lässt sich die Schrägwicklung des Drahtes auf einfache Weise realisieren und bringt eine deutliche Verbesserung der Haftung der Anschwemmschicht mit sich.

Der Draht weist einen im Wesentlichen dreieckförmigen, sich nach innen verjüngenden Querschnitt auf, so dass die Grundlinie des Dreiecks auf der Außenseite des Filterkörpers liegt. Somit ergibt sich eine Spaltbreite, die von der Außenseite des Filterkörpers 2 zur Innenseite hin zunimmt.

In vorteilhafter Weise sind die Ober- und Unterkante der geneigten Fläche des gewundenen Drahtes abgerundet, was sich bereits fertigungsbedingt ergeben kann. Die abgerundeten Kanten können die Gefahr einer Verblockung bei der Rückspülung des Filters noch weiter reduzieren.

Bei einer erfindungsgemäss gewickelten Filterkerze ist die Unterkante der geneigten Fläche einer ersten Windung zu einer Oberkante der geneigten Fläche einer darunter liegenden Drahtwindung nach innen versetzt, wobei der radiale Versatz zwischen in der Grössenordnung von zehntel mm liegt. Dabei liegen bevorzugt alle Unterkanten der geneigten Flächen auf einer zur Längsachse L des Filterkörpers parallelen Gerade und alle Oberkanten der geneigten Fläche auf einer zweiten zur Längsachse L des Filterkörpers parallelen Geraden. Diese Anordnung ermöglicht, dass sich das Anschwemmmaterial wie z.B. Kieselgur gut zwischen den zueinander versetzten Unter- und Oberkanten der aufeinanderfolgenden geneigten Flächen anlagern kann.

Die Erfindung betrifft auch einen Anschwemmfilter, der einen Filterkessel mit einem Unfiltratraum umfasst, wobei im Unfiltratraum zur Filterung von Fluiden Filterkerzen gemäß den Ansprüchen 1 bis 6 angeordnet sind.

Die Erfindung wird im Folgenden unter Zuhilfenahme der nachfolgenden Figuren näher erläutert werden. Dabei zeigt:
- Fig. 1: schematisch einen Längsschnitt durch eine Ausführungsform der erfindungsgemäßen Filterkerze;
- Fig. 1 A: einen Schnitt entlang der Linie A-A der Fig. 1;
- Fig. 2: eine Vergrößerung des Ausschnittes Z der Fig. 1;
- Fig. 3: eine Vergrößerung des Ausschnittes Y in Fig. 2 und
- Fig. 4: einen schematischen Schnitt durch einen Anschwemmfilter, der die erfindungsgemäßen Filterkerzen aufweist.

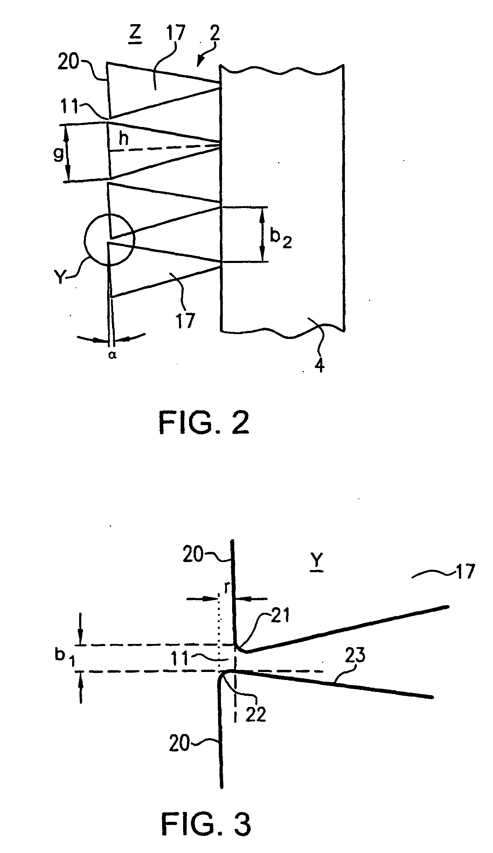

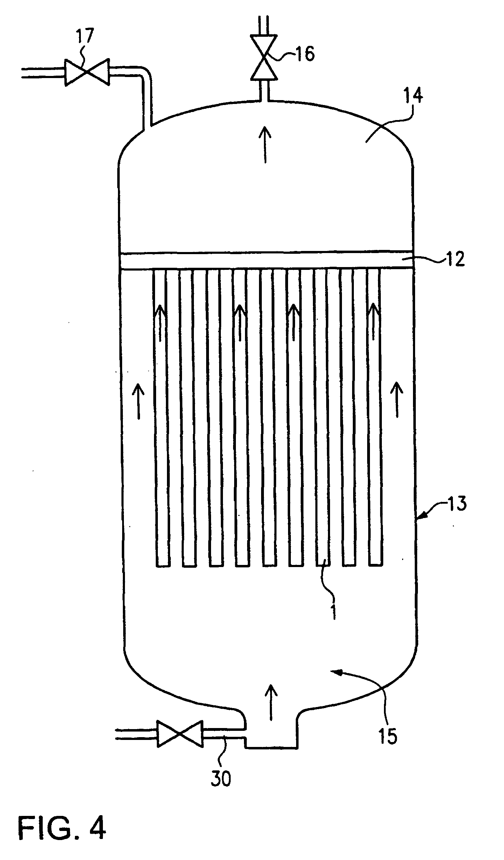

Wie aus Fig. 4 hervorgeht, können die erfindungsgemäßen Filterkerzen zur Filtrierung von Fluiden, insbesondere von Bier, in einem Unfiltratraum 15 eines Filterkessels 13 aufgehängt sein. In diesem Fall sind die Filterkerzen an einer Trennwand 12 befestigt, die den Filterkessel 13 in einen Filtratraum 14 und den Unfiltratraum 15 unterteilt. Das zu filtrierende Fluid, wie z.B. Bier, dem Kieselgur als Filterhilfsmittel zugesetzt worden ist, wird über den Einlass 30 in den Unfiltratraum des Filterkessel 13 eingeleitet. Von dort tritt es durch die Anschwemmschicht, die sich vor und während der Filtration durch Anlagerung von Kieselgur auf der Aussenfläche der Filterkerzen gebildet hat., hindurch, gelangt dann durch die von Spalten zwischen den Drahtwindungen 17 gebildeten Fluideinlässe 11 (Fig.2) in den Innenraum der Filterkerze und wird schliesslich in den Filtratraum 14 weitergeleitet, von wo es dann über einen Auslass 16 aus dem Filterkessel austritt.

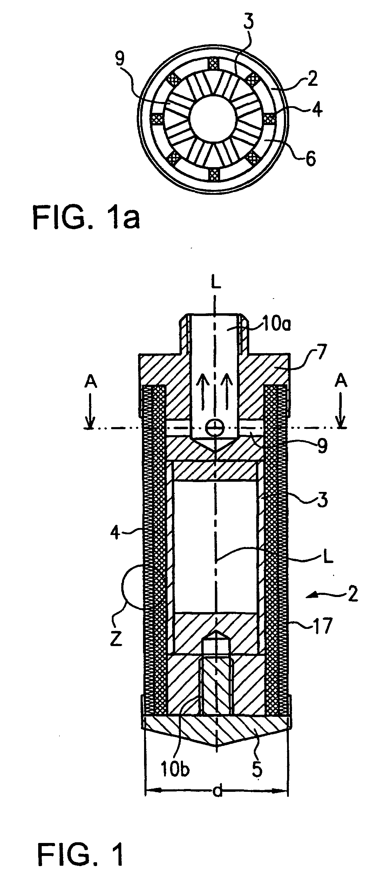

Wie aus Fig. 1 hervorgeht, weist die Filterkerze 1 bei diesem Ausführungsbeispiel einen Filterkörper 2 auf, der aus einem spiralförmig gewundenem Draht 17 gebildet ist. Der Filterkörper ist über Abstandshalter 4 mit einem Innenkörper, hier ein Innenrohr 3, das zur Volumenreduzierung des Innenraums des Filterkörpers 2 dient, verbunden. Der gewundene Draht 17 wird so durch das Innenrohr mit den Abstandshaltem 4 gehalten und getragen. Durch das Innenrohr 3, die Abstandshalter 4 und den gewundenen Draht 17 ergeben sich Filtratkanäle 6 (Fig. 1a durch die das Filtrat durch die Filterkerze nach oben zu den Aussparungen 9 und von dort aus über das Kopfteil 7 in den Filtratbereich 14 strömen kann. Der Filterkörper 2 ist durch ein Kopfteil 7 und ein Endteil 5 verschlossen. Die Erfindung ist aber nicht auf diese Ausführungsform beschränkt; selbstverständlich kann der erfindungsgemäß gewickelte Draht auch z.B. durch verschweißte Stützdrähte in axialer Richtung selbsttragend sein oder eine unterschiedliche Trägerkonstruktion aufweisen.

Die Fig. 2 zeigt vergrößert den Bereich Z der Fig. 1. Wie aus dieser Fig. 2 hervorgeht, weist der spiralförmig gewundene Draht 17, der hier mit dem Abstandselement 4, das sich stabförmig in Längsrichtung des Filterkörpers 2 erstreckt, verschweißt ist, eine im Wesentlichen dreieckige Querschnittsform auf. Die Grundlinie g des spritzwinkligen Dreiecks liegt auf der Außenseite des Filterkörpers 2. Die Grundlinie g hat bevorzugt eine Länge zwischen 0.5 bis 3 mm. Die Höhe h des spitzwinkligen Dreiecks beträgt von 1 bis 5 mm. Die Fläche 20 des gewundenen Drahtes 17, die die Außenseite des Filterkörpers 2 bildet (Grundlinie g), ist unter einem Winkel a in Bezug auf die Längsachse L der Filterkerze geneigt. Dieser Winkel α beträgt in diesem Ausführungsbeispiel ca 3°. Die schräge Fläche 20 kann entweder durch Schrägwicklung des Drahtes 17 erreicht werden oder dadurch, dass die Querschnittsform des Drahtes 17 so gewählt wird, dass der Querschnitt des Dreiecks kein gleichschenkliges spritzwinkliges Dreieck, sondern ein nicht gleichschenkliges spitzwinkliges Dreieck ist, wodurch sich auch die Schrägstellung der Fläche ergibt. Die Unterkante 21 der geneigten Fläche 20 einer ersten Drahtwindung ist nach innen zu der Oberkante 22 der geneigten Fläche 20 einer darunterliegenden Drahtwindung versetzt. Der Versatz r (Fig.3) entspricht dem Abstand zwischen einer ersten Ebene, die entlang der geneigte Fläche 20 einer ersten Windung gedacht ist, zu einer zweiten Ebene, die entlang der geneigten Fläche 20 einer nachfolgenden Windung verläuft. Der radiale Versatz r liegt zwischen ca. 0.5 bis ca 2 mm. Durch den Versatz der Unterkante 21 zu der Oberkante 22 steht die Oberkante 22 jeweils nach aussen gegenüber der darüberliegenden Unterkante hervor, so dass sich hier sehr leicht Filterhilfsmittel als Anschwemmschicht anlagern und gegen ein Herabrutschen gesichert festsetzen kann. Alle Unterkanten 21 der geneigten Flächen 20 liegen auf einer zur Längsachse L des Filterkörpers parallelen Gerade und alle Oberkanten 22 der geneigten Flächen 20 liegen auf einer zweiten zur Längsachse L parallelen Geraden. Somit weist der Filterkörper 2 über seine Länge L einen konstanten Durchmesser auf.

Wie aus der Fig. 3 hervorgeht sind die Unterkante 21 und die Oberkante 22 abgerundet. Dies ist von Vorteil, weil dadurch die Gefahr einer Verblockung noch weiter reduziert wird.

Die Fluiddurchlässe werden durch die Spalte 11 zwischen den jeweiligen Drahtwindungen gebildet. Die Spaltbreite zwischen der Unterkante 21 einer ersten Drahtwindung und der zur Unterkante 21 hingewandten Fläche 23 des Drahtes der benachbarten Windung b1 beträgt bei einem Einsatz als Bierfilter bevorzugt zwischen 5 - 81100 mm, wobei als Abstand b1, wie das aus Fig. 3 hervorgeht, das Lot der Grundfläche g einer Wicklung auf die obere Fläche 23 der benachbarten Wicklung betrachtet. Durch den dreieckförmigen Querschnitt des Drahtes nimmt die Spaltbreite zur Innenseite des Filterkörpers 2 zu.

Bei dem gezeigten Ausführungsbeispiel liegt die Oberkante des gewundenen Drahtes in Bezug auf die Filterkörperachse weiter außen als die Unterkante des Drahtes. Die vorliegende Erfindung soll jedoch nicht hierauf beschränkt sein, da es auch, wenn auch nicht explizit dargestellt, möglich ist, dass die Unterkante des gewundenen Drahtes in Bezug zur Längsachse L des Filterkörpers 2 im Vergleich zur Oberkante weiter außen liegt, also die Neigung entgegengesetzt zu der in den Figuren dargestellten Neigung ist. Auch hier ermöglicht die ungleichmäßige Oberfläche eine bessere Anlagerung der Anschwemmschicht, wobei sich außerdem noch eine vereinfachte Rückspülung ergibt.

## Patentansprüche

1. Filterkerze (1) für Anschwemmfilter zur Filtrierung und/oder Stabilisierung von Fluiden, insbesondere von Bier, mit einem rohrförmigen Filterkörper (2), der aus einem spiralförmig gewundenen Draht (17) gebildet ist, wobei Spalte (11) zwischen den Drahtwindungen als Fluiddurchlässe vorgesehen sind, **dadurch gekennzeichnet, dass**
die Fläche (20) des gewundenen Drahtes (17), die auf der Außenseite des Filterkörpers (2) liegt, unter einen Winkel a in Bezug auf die Längsachse (1L) der Filterkerze (1) geneigt ist,
der Draht (17) einen im Wesentlichen dreieckförmigen, sich nach innen verjüngenden Querschnitt aufweist, wobei die Grundlinie (g) des Dreiecks auf der Außenseite des Filterkörpers (2) liegt,
so dass sich ein Versatz der Flächen (20) von aufeinanderfolgenden Drahtwindungen ergibt.

2. Filterkerze nach Anspruch 1, **dadurch gekennzeichnet, dass** der Winkel α in einem Bereich zwischen 1 und 10° vorzugsweise zwischen 3 und 5° liegt.

3. Filterkerze nach mindestens einem der vorhergehenden Ansprüche, **dadurch gekennzeichnet, dass** die Oberkante (22) und die Unterkante (21) der geneigten Fläche 20 des gewundenen Drahtes (17) abgerundet sind.

4. Filterkerze nach mindestens einem der vorhergehenden Ansprüche, **dadurch gekennzeichnet, dass** der radiale Versatz (r) zwischen einer Oberkante der geneigten Fläche eines ersten Drahtwindung und der Unterkante (21) der geneigten Fläche einer darauf folgenden Drahtwindung zwischen 1/10 mm und 1 mm beträgt.

5. Filterkerze nach mindestens einem der vorhergehenden Ansprüche, **dadurch gekennzeichnet, dass** der Draht aus einem korrosionsbeständigen, lebensmitteltauglichen Material besteht.

6. Anschwemmfilter, umfassend einen Filterkessel (13) mit einem Unfiltratraum (15) in dem zur Filterung von Fluiden Filterkerzen gemäß den Ansprüchen 1 bis 5 angeordnet sind.

## Claims

1. Filter candle (1) for precoat filters for filtering and/or stabilizing fluids, in particular beer, having a tubular filter body (2) which is formed from a helically wound wire (17), gaps (11) being provided between the wire windings as fluid passages, **characterized in that**
the surface (20) of the wound wire (17), which is located on the outside of the filter body (2), is inclined at an angle α in relation to the longitudinal axis (1L) of the filter candle (1),
the wire (17) has an essentially triangular, inwardly tapering cross section, the base line (g) of the triangle being located on the outside of the filter body (2),
this resulting in the surfaces (20) of successive wire windings being offset.

2. Filter candle according to Claim 1, **characterized in that** the angle α is in a range between 1 and 10°, preferably between 3 and 5°.

3. Filter candle according to at least one of the preceding claims, **characterized in that** the top edge (22) and the bottom edge (21) of the inclined surface (20) of the wound wire (17) are rounded.

4. Filter candle according to at least one of the preceding claims, **characterized in that** the radial offset (r) between a top edge of the inclined surface of a first wire winding and the bottom edge (21) of the inclined surface of a following wire winding is between 1/10 mm and 1 mm.

5. Filter candle according to at least one of the preceding claims, **characterized in that** the wire consists of a corrosion-resistant, food-compatible material.

6. Precoat filter comprising a filter tank (13) with a filter-feed chamber (15) in which, for the purpose of filtering fluids, filter candles according to Claims 1 to 5 are arranged.

## Revendications

1. Bougie filtrante (1) pour filtre à couches pour filtrer et/ou stabiliser des fluides, en particulier de la bière, présentant un corps de filtre (2) de forme tubulaire, qui est formé d'un fil (17) enroulé en forme de spirale, des interstices (11) étant prévus entre les spires de fil en tant que passages de fluide, **caractérisée en ce que**
la surface (20) du fil enroulé (17) qui se situe sur le côté extérieur du corps filtrant (2) est inclinée sous un angle α par rapport à l'axe longitudinal (1L) de la bougie filtrante (1),
le fil (17) présente une section transversale essentiellement triangulaire, se rétrécissant vers l'intérieur, la base (g) du triangle étant située sur le côté extérieur du corps de filtre (2),
de telle façon qu'il s'obtient un décalage des surfaces (20) de spires successives.

2. Bougie filtrante selon la revendication 1, **caractérisée en ce que** l'angle α se situe dans une plage comprise entre 1 et 10°, de préférence entre 3 et 5°.

3. Bougie filtrante selon au moins l'une des revendications précédentes, **caractérisée en ce que** l'arête supérieure (22) et l'arête inférieure (21) de la surface inclinée 20 du fil enroulé (17) sont arrondies.

4. Bougie filtrante selon au moins l'une des revendications précédentes, **caractérisée en ce que** le décalage radial (r) entre une arête supérieure de la surface inclinée d'une première spire et l'arête inférieure (21) de la surface inclinée d'une spire suivante est compris entre 1/10 mm et 1 mm.

5. Bougie filtrante selon au moins l'une des revendications précédentes, **caractérisée en ce que** le fil est constitué d'un matériau résistant à la corrosion de qualité alimentaire.

6. Filtre à couches comprenant une cuve de filtrage (13) comportant un espace pour produit non filtré (15) dans lequel sont disposées pour le filtrage de fluides des bougies filtrantes selon les revendications 1 à 5.
